# EUROPÄISCHE PATENTSCHRIFT

(11) **EP 4 427 703 B1**
(45) Veröffentlichungstag und Bekanntmachung des Hinweises auf die Patenterteilung: **19.08.2026**
(21) Anmeldenummer: 23160935.5
(22) Anmeldetag: 09.03.2023
(51) Int. Cl.: A61C 13/225, A61C 13/271

(54) **VERFAHREN ZUR DIGITALEN HERSTELLUNG VON TEILPROTHESEN**
METHOD FOR DIGITAL PRODUCTION OF PARTIAL PROSTHESES
PROCÉDÉ DE FABRICATION NUMÉRIQUE DE PROTHÈSES PARTIELLES

(43) Veröffentlichungstag der Anmeldung: 11.09.2024
(73) Patentinhaber: Ivoclar Vivadent AG, 9494 Schaan (LI)
(72) Erfinder: Watzke, Ronny, 6800 Feldkirch (AT)
(74) Vertreter: Baldus, Oliver

(56) Entgegenhaltungen:
- WO-A1-2016/141474
- WO-A1-2017/193981
- CN-A- 106 580 496

## Beschreibung

Die vorliegende Erfindung betrifft ein Herstellungssystem zum digitalen Herstellen von Teilprothesen, ein Herstellungsverfahren zum digitalen Herstellen von Teilprothesen.

Teilprothesen bestehen aus mehreren Teilen und unterschiedlichen Materialien. Die Ausdehnung oder Größe der Teilprothesen richtet sich dabei nach dem Vorhandensein von Zähnen im Mund eines Patienten. Die Zahnsituation kann im Vergleich zur totalen Zahnlosigkeit individuell hinsichtlich der Anzahl und Ausdehnung von Lücken unterschiedlich sein. Die Fertigung von Teilprothesen ist zeitintensiv sowie aufgrund der Vielzahl an Materialien und Arbeitsschritten fehleranfällig.

Derzeit werden für die konventionelle Herstellung von Teilprothesen mehrere Modelle benötigt. Das Metallgerüst wird konventionell mittels Einbettmassemodell erstellt, modelliert und gegossen. Das Metallgerüst wird dann auf dem Meistermodell aufgebracht. Im Artikulator erfolgt dann die Wachsmodellierung der Gingiva-Anteile und die Zahnaufstellung. Über ein Lost-Wax Verfahren wird dann beispielsweise die Teilprothese fertiggestellt, bei dem anstelle des Wachses zahnfleischfarbener Kunststoff injiziert wird. Das Modellieren der Gingiva- und Zahnanteile in Wachs und das Überführen ist fehleranfällig und aufwendig.

Anschließend erfolgt die Ausarbeitung im Artikulator mit einer Okklusionskontrolle, sogenannte primäre Remontage. Nach Entfernung der Teilprothese vom Artikulator wird diese final ausgearbeitet und poliert. Dieses Verfahren ist ebenfalls aufwändig und das Arbeiten mit mehreren Modellen kann zu Transferfehlern führen.

Die Druckschrift WO 2016/141474 A1 betrifft computergestützte Verfahren zur Gestaltung und Herstellung herausnehmbarer Teilprothesen mit verbesserten biomechanischen Eigenschaften. Herausnehmbare Teilprothesen (Removable Partial Dentures - RPDs) sind Zahnprothesen, die die Wiederherstellung eines oder mehrerer, aber nicht aller natürlichen Zähne eines Patienten ermöglichen.

Die Druckschrift WO 2017/193981 A1 betrifft ein Verfahren zum Bearbeiten Zahnrestauration das ein Verbundsystem umfasst, das aus einem optischen Scan- und computergestützten Designsystem, einem CAD-Hilfssystem und einer selektiven Laserauftragsmaschine besteht.

Die Druckschrift CN 106580496A betrifft eine Reparaturmethode, die das bestehende orale CAD/CAM-System mit der Metall-3D-Drucktechnologie kombiniert.

Die Erfindung ist durch den Gegenstand des Anspruchs 1 definiert.

Es ist die technische Aufgabe der Erfindung, Benutzerfehler bei der Planung einer Teilprothese zu verringern. Technisch vorteilhafte Ausführungsformen sind Gegenstand der abhängigen Ansprüche. Gemäß einem Aspekt wird die technische Aufgabe durch ein Computerprogramm umfassend Befehle gelöst, die bei der Ausführung des Computerprogramms durch einen Computer diesen veranlassen, ein Herstellungsverfahren in einem Herstellungssystem zum Herstellen von Teilprothesen auszuführen, das eine Herstellungsvorrichtung zum automatischen Herstellen eines Prothesengerüsts, einer Prothesenbasis und/oder von Prothesenzähnen umfasst, mit den Schritten eines digitalen Gestaltens eines Prothesengerüsts mit Kopplungselementen an die Restzahnhartsubstanz mittels einer Benutzerschnittstelle; eines digitalen Gestaltens einer Prothesenbasis mittels der Benutzerschnittstelle; und eines digitalen Gestaltens von Prothesenzähnen mittels der Benutzerschnittstelle; wobei das Computerprogramm ausgebildet ist, einen Vorschlag für die räumliche Form des Prothesengerüsts mit Kopplungselementen an die Restzahnhartsubstanz, einer Prothesenbasis und/oder von Prothesenzähnen zu berechnen.

In einer vorteilhaften Ausführungsform ist werden Prothesengerüst, die Prothesenbasis und/oder die Prothesenzähne automatisch durch eine Herstellungsvorrichtung hergestellt. Dadurch wird beispielsweise ebenfalls der technische Vorteil erreicht, dass die fertige Teilprothese sofort an den Zahnarzt zur Eingliederung geliefert werden kann.

In einer weiteren vorteilhaften Ausführungsform wird das Prothesengerüst durch eine erste Herstellungseinheit und die Prothesenbasis und/oder die Prothesenzähne durch eine zweite Herstellungseinheit hergestellt. Dadurch wird beispielsweise der technische Vorteil erreicht, dass die Herstellung der einzelnen Teile des Designs je nach zu verwendeten Materialien in unterschiedlichen Fertigungsaufträgen erfolgen kann. Jedes Teil wird mit dem anderen Teil gekoppelt und daran angepasst.

In einer weiteren vorteilhaften Ausführungsform werden Daten des gestalteten Prothesengerüsts, der gestalteten Prothesenbasis und/oder der gestalteten Prothesenzähne über eine Exportschnittstelle exportiert. Dadurch wird beispielsweise der technische Vorteil erreicht, dass die Daten von anderen Vorrichtungen weiterverarbeitet werden können.

In einer weiteren vorteilhaften Ausführungsform wird ein Positionierungssystem zum gegenseitigen Positionieren des Prothesengerüsts, der Prothesenbasis und/oder der Prothesenzähne über die Benutzerschnittstelle digital gestaltet. Dadurch wird beispielsweise der technische Vorteil erreicht, dass die Komponenten auf einfache und schnelle Weise formrichtig zusammengesetzt werden können.

Ein Herstellungssystem zum digitalen Herstellen von Teilprothesen umfasst eine Benutzerschnittstelle zum digitalen Gestalten eines Prothesengerüsts mit Kopplungselementen an die Restzahnhartsubstanz, eine Prothesenbasis und von Prothesenzähnen. Das Herstellungssystem kann durch eine Software gebildet sein, die alle Konstruktionselemente für die Komponenten der Teilprothese vereint. Die Kopplungselemente sind beispielsweise durch Doppelkronen (Teleskope), Geschiebe, Anker, Klammern, Magnete und/oder Stege gebildet. Durch das lagerichtige Zusammenbauen der Einzelelemente wird die Komplexität verringert.

In einer technisch vorteilhaften Ausführungsform des Herstellungssystems umfasst das Herstellungssystem eine Herstellungsvorrichtung zum automatischen Herstellen des Prothesengerüsts, der Prothesenbasis und/oder der Prothesenzähne. Dadurch wird beispielsweise der technische Vorteil erreicht, dass nach einer abschließenden Politur die fertige Teilprothese sofort an den Zahnarzt zur Eingliederung in das Gebiss eines Patienten geliefert werden kann.

In einer weiteren technisch vorteilhaften Ausführungsform des Herstellungssystems ist die Herstellungsvorrichtung ausgebildet, das Prothesengerüst, die Prothesenbasis und/oder die Prothesenzähne mittels eines additiven und/oder subtraktiven Herstellungsverfahrens herzustellen.

In einer weiteren technisch vorteilhaften Ausführungsform des Herstellungssystems umfasst die Herstellungsvorrichtung eine erste Herstellungseinheit zum Herstellen des Prothesengerüsts und eine zweite Herstellungseinheit zum Herstellen der Prothesenbasis und/oder der Prothesenzähne oder die Herstellungsvorrichtung ist ausgebildet, das Prothesengerüst, die Prothesenbasis und/oder der Prothesenzähne mittels einer einzigen Herstellungseinheit herzustellen. Die erste Herstellungseinheit kann ein erstes Herstellungsverfahren verwenden und die zweite Herstellungseinheit kann ein zweites Herstellungsverfahren verwenden. Das erste und das zweite Herstellungsverfahren können unterschiedlich sein. Dadurch wird beispielsweise der technische Vorteil erreicht, dass je nach herzustellender Komponente eine besonders geeignete Herstellungseinheit verwendet werden kann.

In einer weiteren technisch vorteilhaften Ausführungsform des Herstellungssystems umfasst das Herstellungssystem eine Exportschnittstelle zum Exportieren von Daten des gestalteten Prothesengerüsts, der gestalteten Prothesenbasis und/oder der gestalteten Prothesenzähne. Dadurch wird beispielsweise der technische Vorteil erreicht, dass die Daten über die einzelnen Komponenten von anderen Vorrichtungen weiterverarbeitet werden können.

In einer weiteren technisch vorteilhaften Ausführungsform des Herstellungssystems ist das Herstellungssystem ausgebildet, ein Positionierungssystem zum gegenseitigen Positionieren des Prothesengerüsts, der Prothesenbasis und/oder der Prothesenzähne über die Benutzerschnittstelle digital zu gestalten. Dies kann manuell vom Zahntechniker erfolgen oder automatisiert über die Software. Die intraorale Patientensituation zur digitalen Gestaltung der oben genannten Komponenten, wird an die Software entweder mittels eines Intraoralscans oder eines Scans eines Zahnmodells zur Verfügung gestellt. Das Zahnmodel wird dabei mittels eines Abdrucks am Patienten gewonnen, dies findet insbesondere bei stark unbezahnten Patienten Anwendung. Aus den Daten des Intraoralscans kann ein Modell hergestellt werden, woran der Zusammenbau der Einzelelemente stattfinden könnte. Dadurch wird beispielsweise der technische Vorteil erreicht, dass die Komponenten auf einfache Weise und präzise zusammengefügt werden können.

In einer weiteren technisch vorteilhaften Ausführungsform des Herstellungssystems umfasst das Positionierungssystem formschlüssige Positionierelemente. Dadurch wird beispielsweise der technische Vorteil erreicht, dass eine spielfreie Positionierung der Komponenten ermöglicht wird.

In einer weiteren technisch vorteilhaften Ausführungsform des Herstellungssystems sind die formschlüssigen Positionierelemente gegeneinander verrastbar, einschiebbar oder ineinander einsteckbar. Dadurch wird beispielsweise der technische Vorteil erreicht, dass die Komponenten automatisch in der richtigen Position fixiert sind.

In einer weiteren technisch vorteilhaften Ausführungsform des Herstellungssystems umfassen die formschlüssigen Positionierelemente Vorsprünge und/oder Aussparungen. Dadurch wird beispielsweise der technische Vorteil erreicht, dass eine besonders genaue Ausrichtung der Komponenten erreicht wird.

Ein Herstellungsverfahren zum Herstellen von Teilprothesen umfasst die Schritte eines digitalen Gestaltens eines Prothesengerüsts mit Kopplungselementen an die Restzahnhartsubstanz mittels einer Benutzerschnittstelle; eines digitalen Gestaltens einer Prothesenbasis mittels der Benutzerschnittstelle; und eines digitalen Gestaltens von Prothesenzähnen mittels der Benutzerschnittstelle. Durch das Herstellungsverfahren werden die gleichen technischen Vorteile wie durch das Herstellungssystem nach dem ersten Aspekt erreicht.

Ein Positionierungssystem zum gegenseitigen Positionieren eines Prothesengerüsts, einer Prothesenbasis und/oder von Prothesenzähne umfasst zumindest ein räumliches Positionierelement, das an dem Prothesengerüst, der Prothesenbasis und/oder den Prothesenzähne angeordnet ist. Dadurch wird der technische Vorteil erreicht, dass die Komponenten genau und formrichtig zusammengesetzt werden können.

Ausführungsbeispiele der Erfindung sind in den Zeichnungen dargestellt und werden im Folgenden näher beschrieben.

Es zeigen:
- Fig. 1: eine schematische Darstellung eines Herstellungssystems für eine Teilprothese;
- Fig. 2: eine schematische Darstellung einer Teilprothese;
- Fig. 3: eine vergrößerte schematische Darstellung der Teilprothese mit einer Darstellung einer Fügegeometrie zwischen Prothesengerüst und Prothesenbasis;
- Fig. 4: eine weitere schematische Darstellung einer Teilprothese mit einer Darstellung einer Fügegeometrie zwischen Prothesengerüst und Prothesenbasis;
- Fig. 5: eine weitere schematische Darstellung einer Teilprothese mit einer Darstellung einer Fügegeometrie zwischen einem Prothesengerüst und einer Prothesenbasis und zwischen einer Prothesenbasis und einem Zahnanteil;
- Fig. 6: eine weitere schematische Darstellung einer Teilprothese mit einer Darstellung einer Fügegeometrie zwischen dem Prothesengerüst und der Prothesenbasis, bei der auf das Prothesengerüst im Sattelbereich verzichtet wurde;
- Fig. 7: eine weitere schematische Darstellung einer Teilprothese mit einer Darstellung eines Positioniersystems;
- Fig. 8: eine weitere schematische Darstellung weiterer Teilprothesen mit einer Darstellung eines weiteren Positioniersystems; und
- Fig. 9: ein Blockdiagramm des Herstellungsverfahrens zum digitalen Herstellen von Teilprothesen.

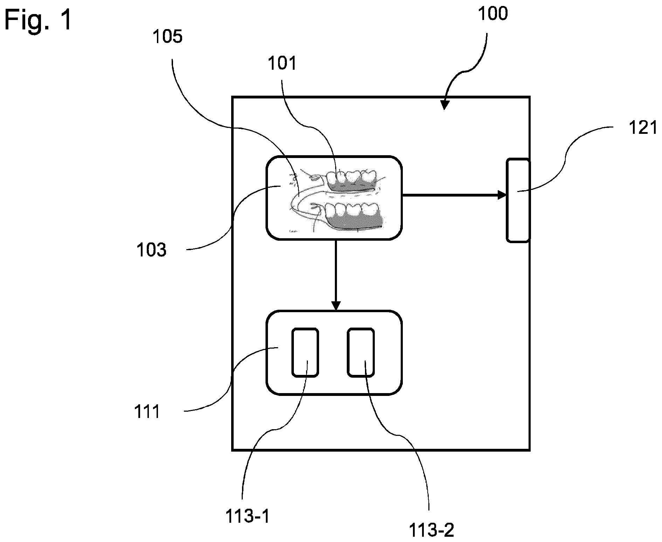

Fig. 1 zeigt eine schematische Darstellung eines Herstellungssystems 100 zum digitalen Herstellen einer dentalen Teilprothese 101. Das Herstellungssystem 100 ist beispielweise durch ein abgestimmtes und angepasstes CAD/CAM-System gebildet.

Das Herstellungssystem 100 umfasst eine Benutzerschnittstelle 103 zum digitalen Gestalten eines Prothesengerüsts mit Kopplungselementen, einer Prothesenbasis und von Prothesenzähnen als verschiedene Komponenten der Teilprothese 101. Die Teilprothese 101 kann vollständig und mit allen Komponenten über das digitale Herstellungssystem 100 konstruiert werden. Dadurch wird ein hochpräziser und Zusammenbau der Komponenten der Teilprothese 101 erreicht.

Durch das Herstellungssystem 100 können die Prothesenzähne der Teilprothese 101 individuell auf den Patienten abgestimmt werden. Dies erzielt bessere Ergebnisse als die Verwendung von Konfektionszähnen, da eine bessere Individualität, Funktion und Ästhetik erreicht werden.

Sobald die Komponenten der Teilprothese 101 digital gestaltet worden sind, können diese mittels einer
Herstellungsvorrichtung 111 aufbauend oder abtragend hergestellt werden. Das Herstellungssystem 100 umfasst eine Exportschnittstelle 121 zum Exportieren von Daten des gestalteten Prothesengerüsts mit den Kopplungselementen (Modellgussgerüst), der gestalteten Prothesenbasis (Gingiva-Anteil) und/oder der gestalteten Prothesenzähne. Dadurch kann ein automatischer Export für die jeweiligen Komponenten erfolgen, Prothesengerüst mit Kopplungselementen, Prothesenbasis, Prothesenzähne. Ein Export von kombinierten Komponenten an eine Herstellungsvorrichtung, wie beispielsweise einen Multimaterialdruck (Inkjet-Druck), ist ebenfalls möglich. Allerdings kann die Herstellungsvorrichtung auch einen speziell gestalteten Rohling verwenden, aus dem die jeweilige Komponente herausgefräst wird, wie beispielsweise einen Zwei- oder Mehrfarbenrohling oder einen Multimaterialrohling.

Das Herstellungssystem bietet die Möglichkeit die unterschiedlichen Komponenten der Teilprothese 101 mittels einer oder mehrerer Herstellungseinheiten 113-1 und 113-2 herstellen zu können. In den Herstellungseinheiten 113-1 und 113-2 können unterschiedliche Herstellungsverfahren eingesetzt werden. Im Allgemeinen erfolgt die Herstellung der Komponenten der Teilprothese 101 monolithisch aus einem Stück, subtraktiv oder additiv. Es kann auch nur eine einzige Herstellungsvorrichtung zum Herstellen aller Komponenten verwendet werden, wie beispielsweise ein dreidimensionaler Multimaterialdruck (Inkjet-Druck). Hiermit lässt sich die Teilprothetik auf effiziente Weise in einem Arbeitsschritt herstellen. Je nach herzustellender Komponente können jedoch unterschiedliche Herstellungsverfahren eingesetzt werden, um die Materialeigenschaften unterschiedlicher Herstellungsmaterialien bestmöglich auszunutzen.

Das Prothesengerüst 105 mit Kopplungselementen kann aus Metall über ein additives oder subtraktives Verfahren mittels einer ersten Herstellungseinheit 113-1 hergestellt werden. Das Prothesengerüst 105 kann aber auch aus anderen Materialien hergestellt sein, wie beispielsweise Polyetheretherketon PEEK oder anderen thermoplastischen Hochleistungspolymeren. Für die thermoplastischen Hochleistungspolymere wird beim Inkjet-Druck ein separater oder spezieller Druckkopf mit Heizelementen, um das Material auf Betriebstemperatur zu bringen.

Polyetheretherketon ist ein hochtemperaturbeständiger, thermoplastischer, teilkristalliner Kunststoff mit einem Schmelzpunkt von 343 °C und einer Glasübergangstemperatur von 143 °C. Die physikalischen, chemischen und biologischen Eigenschaften von Polyetheretherketon ermöglichen die Herstellung von definitivem Zahnersatz in allen Indikationsbereichen. Im Allgemeinen sind aber auch andere Materialien denkbar.

Die Prothesenbasis und die Prothesenzähne können über ein additives oder subtraktives Verfahren mittels einer zweiten Herstellungseinheit 113-2 hergestellt werden. Um die Effizienz zu steigen, könnten eine Prothesenbasis und Prothesenzähne in einem einzigen Fertigungsschritt hergestellt werden, beispielsweise subtraktiv oder additiv mit mindestens zwei Farben und zwei Materialien im 3D-Druck.

Dies kann in einem subtraktiven Herstellungsverfahren über einen speziellen zweifarbigen und/oder Multimaterial- Rohling geschehen (Ceramic Disk). Bei einem additiven Herstellungsverfahren wird ein dreidimensionales Multifarben/Multimaterialien-Druckverfahren verwendet. Hierbei werden mindestens zwei Materialien und zwei Farben für das dreidimensionale Druckverfahren verwendet und selektiv aufgetragen (Inkjet-Verfahren). Eine weitere Steigerung der Effizienz kann durch die Herstellung aller Komponenten in einem Arbeitsschritt erreicht werden.

Nach der Herstellung mehrerer Komponenten für die Teilprothese 101 können diese einfach zu der Teilprothese zusammengesetzt werden. Aufgrund der digitalen Gestaltung kann der präzise Zusammenbau der einzelnen Komponenten der Teilprothese 101 modellfrei erfolgen. Die gefertigten Komponenten der Teilprothese werden mittels einem Positionierungssystem gefügt oder verklebt. Das Positionierungssystem ist zum Beispiel durch Steckverbindungen aufgebaut und erlaubt eine modellfreie und präzise Montage der einzelnen Komponenten.

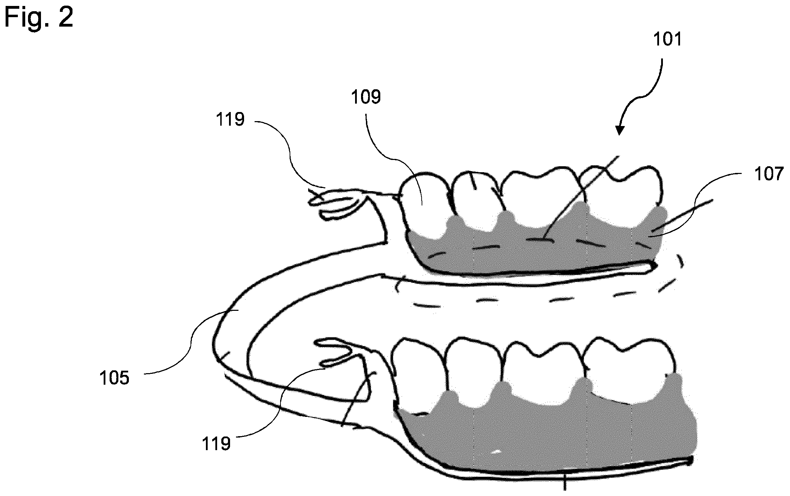

Fig. 2 zeigt eine schematische Darstellung einer Teilprothese 101. Die Teilprothese 101 umfasst Kopplungs- oder Halteelemente 119, mit denen die Teilprothese 101 an die verbleibenden Zähne angekoppelt und abgestützt wird. Zudem umfasst die Teilprothese 101 Verbindungselemente, eine Prothesenbasis 107 und Prothesenzähne 109.

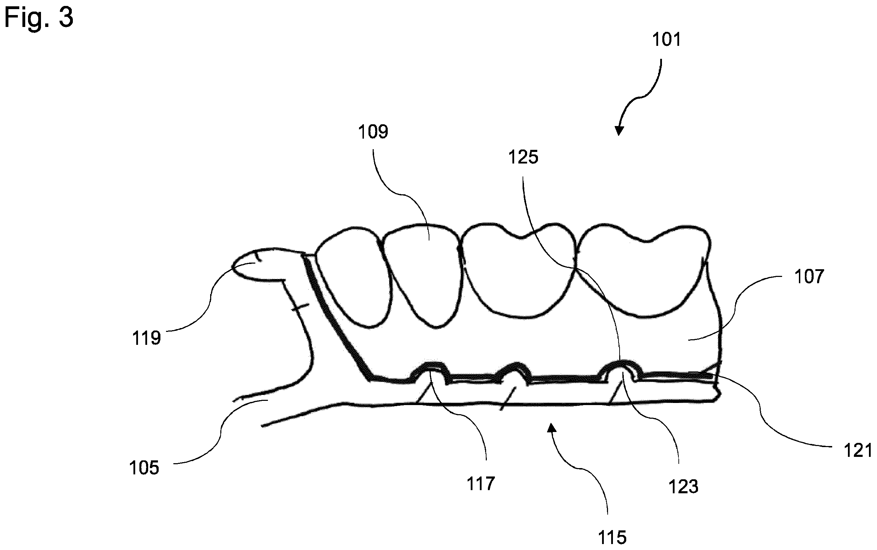

Fig. 3 zeigt eine vergrößerte schematische Darstellung der Teilprothese 101. Das Herstellungssystem 100 ist zudem ausgebildet, ein Positionierungssystem 115 zum gegenseitigen Positionieren des Prothesengerüsts 105, der Prothesenbasis 107 und/oder der Prothesenzähne 109 über die Benutzerschnittstelle 103 digital zu gestalten.

Das Positionierungssystem 115 umfasst formschlüssige Positionierelemente 117, die gegeneinander verrastbar oder ineinander einklickbar, einschiebbar oder einsteckbar sind. In diesem Fall umfasst das Prothesengerüst 105 Vorsprünge 123 als Positionierelemente 117, die entsprechende Ausnehmungen 125 der Prothesenbasis 107 eingesetzt werden. Zwischen dem Positionierungselement 117 und der Prothesenbasis 107 befindet sich ein Fügemedium 121. Das Fügemedium 121, wie beispielsweise ein Zement oder Kleber, stellt den zusätzlichen chemischen Verbund zwischen den Komponenten her.

Durch das Positionierungssystem 115 kann ein Einrast- oder Fügesystem zwischen Prothesengerüst 105, Prothesenbasis 107 und Prothesenzahn 109 realisiert werden und modellfrei gearbeitet werden. Dadurch wird eine Prozessoptimierung der Herstellung erreicht, beispielsweise durch ein Weglassen eines Einbettmassemodell.

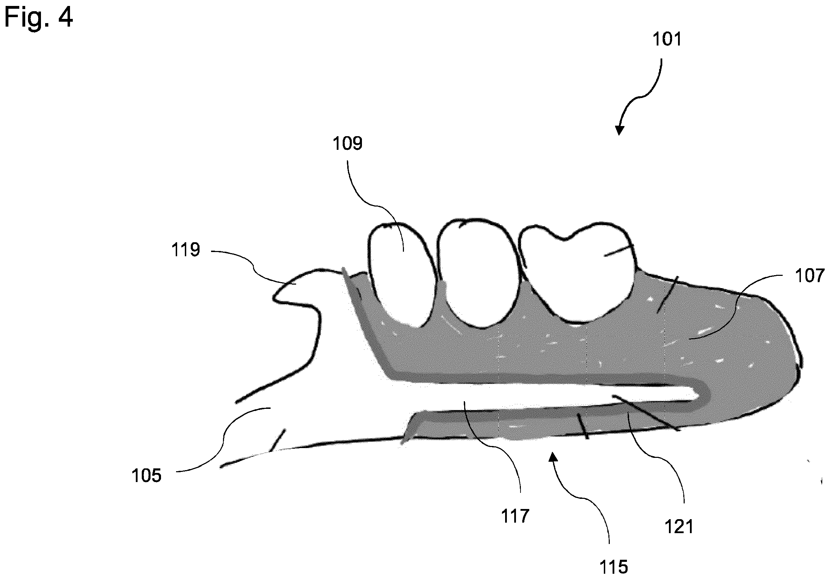

Fig. 4 zeigt eine weitere schematische Darstellung einer Teilprothese 101. Die Teilprothese 101 umfasst einen Dorn als Positionierelement 117 für eine Prothesenbasis 107, die mit einem dreidimensionalen Druckverfahren hergestellt worden ist. Die Prothesenbasis 107 und der Prothesenzahn 109 können auch in einem Frässchritt aus einem zweifarbig vorgestalteten Rohling gefräst worden sein.

Die Prothesenbasis 107 und die Prothesenzähne 109 sind beispielsweise mittels eines dreidimensionalen Multifarben/Multimaterialien-Druckverfahrens in einer wasserlöslichen Stützstruktur hergestellt worden. Hierbei werden zwei oder mehr Materialien und zwei Farben für das dreidimensionale Druckverfahren verwendet. Im Speziellen können drei Materialien verdruckt werden, um die Prothesenbasis 107 herzustellen. Das Prothesengerüst kann ebenfalls aus Kunststoff gebildet und Zahnfarben sein. Somit braucht es keinen Opaker und es gibt einen chemischen Verbund zwischen allen Bestandteilen der Prothese

Auch zur Herstellung der gesamten Teilprothese 101 kann ein Multifarben/Multimaterialien-Druckverfahren verwendet werden. Hierbei werden zwei oder mehr Materialien und/oder zwei oder mehr Farben für das dreidimensionale Druckverfahren verwendet und selektiv aufgetragen (Inkjet-Verfahren). Die Materialien können eingefärbte Materialien sein oder mit den Farbdruckköpfen noch eingefärbt werden. Hierbei können ein einem Arbeitsschritt alle Komponenten hergestellt werden und es ist möglich, mehrere unterschiedliche Materialien miteinander zu vereinen.

Der Dorn des Prothesengerüstes 117 bildet eine Positionierungshilfe, die in eine entsprechende Aussparung der Prothesenbasis 107 eingesetzt ist. Dieser Dorn ist beispielsweise konisch ausgestaltet. Die Ausgestaltung der Positionierhilfe richtet sich je nach Anforderung an die jeweilige Ausgestaltung der Teilprothese oder der Beschaffenheit deren Prothesenbasisabschnitts hinsichtlich der Patientensituation. Dadurch entsteht ebenfalls ein Positionierungssystem 115. Zwischen dem Positionierungselement 117 und der Prothesenbasis 107 befindet sich ein Fügemedium 121.

Als Fügemedium 121 kommt beispielsweise ein kompositbasierter Zement zum Einsatz. Die Aushärtung des Zementes kann steuerbar sein, wie beispielsweise durch Photopolymerisation. Um Metallanteile der Teilprothese 101 abzudecken, weist das Fügemedium eine hohe Lichtundurchlässigkeit (Opazität) auf. In diesem Fall kann auf die Verwendung eines Opakers verzichtet werden, so dass die Effizienz im Zahntechniklabor erhöht wird. Durch die hohe Opazität des Zements kann auf einen Opakerbrand verzichtet werden.

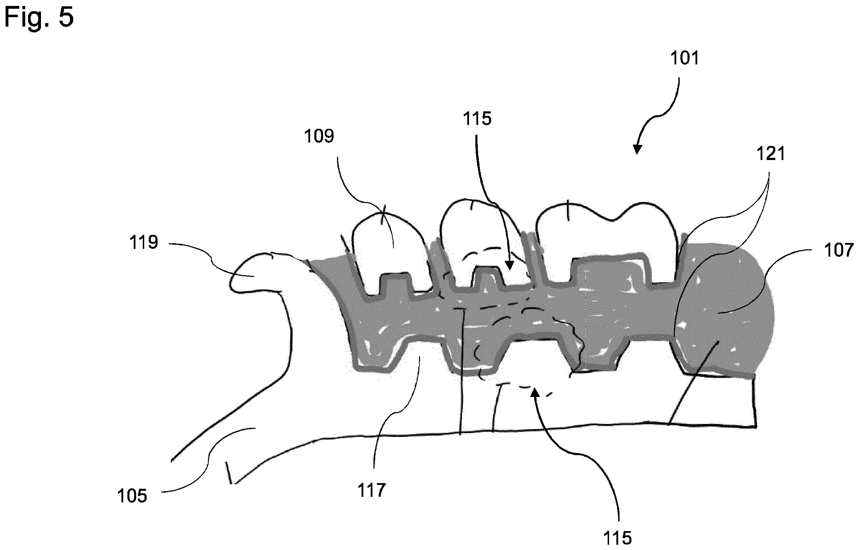

Fig. 5 zeigt eine weitere schematische Darstellung einer Teilprothese 101. Die Teilprothese 101 ist aus drei Komponenten zusammengesetzt. Die Prothesenzähne 109 sind beispielsweise aus gefrästen Einzelzähnen oder Zahngruppen gebildet. Sowohl zwischen den Prothesenzähnen 109 und der Prothesenbasis 107 als auch zwischen der Prothesenbasis 107 und dem Prothesengerüst 105 ist ein Positionierungssystem 115 angeordnet. Zwischen den jeweiligen Komponenten befindet sich das Fügemedium 121.

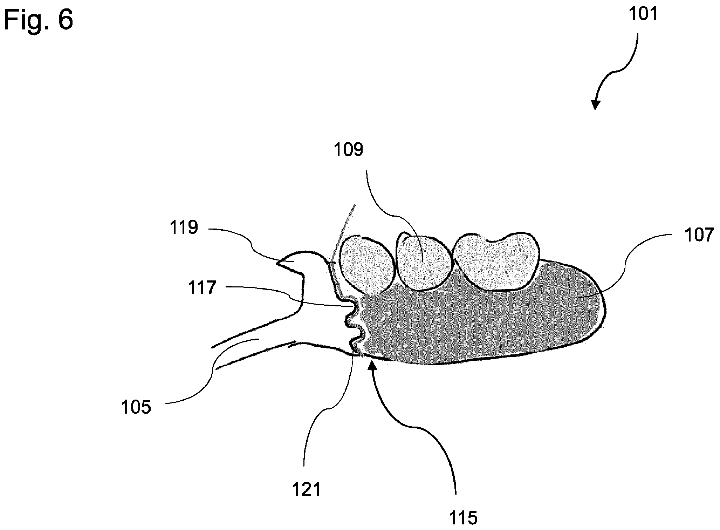

Fig. 6 zeigt eine weitere schematische Darstellung einer Teilprothese 101, bei der das Prothesengerüst 105 nicht unterhalb des Prothesensattels liegt, sondern seitlich angeordnet ist. Das Prothesengerüst 105 umfasst Vorsprünge, die in entsprechende Aussparungen in der Prothesenbasis eingreifen und so ein räumliches Positionierungssystem bilden.

Der untere Dorn als Positionierhilfe kann auch weiter in die Prothesenbasis 107 eingreifen. Dadurch kann eine bessere Stabilität gewährleistet werden. Die Teilprothese 101 funktioniert auch ohne untere Verstärkung. Diese Gestaltung verringert die Materialkosten aufgrund des geringeren Anteils des Prothesengerüstmaterials.

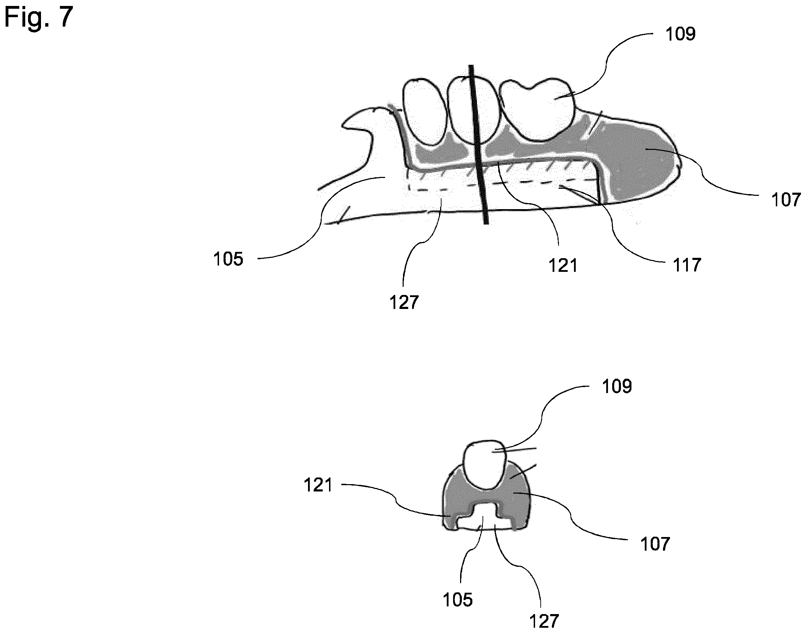

Fig. 7 zeigt eine weitere schematische Darstellung einer Teilprothese 101 mit einer Darstellung eines Positioniersystems 115. Die Positionierung des Prothesengerüstes 105 erfolgt horizontal und/oder vertikal, lateral, unterhalb und/oder innerhalb der Prothesenbasis 107 und/oder der Prothesenzähne 109. Bei einem modellfreien Fixieren der Kopplungselemente können unterschiedliche geometrische Formen verwendet werden, wie beispielsweise ein Druckknopfdesign oder Legosteinprinzip, eine Steckleiste oder Klickleiste (Klickbar), eine stegförmige oder längliche Anordnung.

Im gezeigten Fall umfasst Prothesengerüst 105 ein Positionierungssystem 115 mit einem Steg als Positionierungselement 117. Der Steg weist im Querschnitt einen Stufenaufbau auf. Der Steg weist eine mittlere Erhebung auf, die seitlich abgestuft ist. Die Prothesenbasis 107 weist eine entsprechende Aussparung auf und ist formschlüssig auf den Steg aufgesetzt.

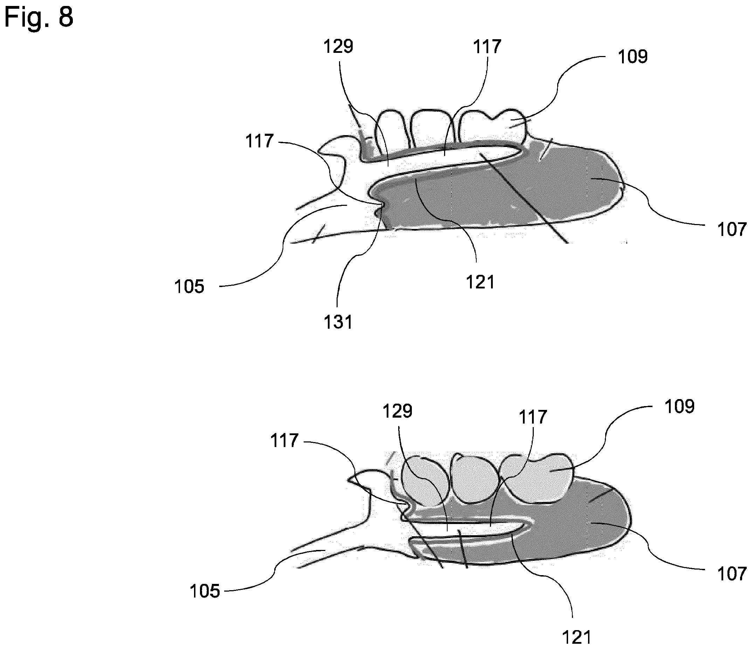

Fig. 8 zeigt eine weitere schematische Darstellung von Teilprothesen 101 mit einer Darstellung eines weiteren Positioniersystems. Eine Positionierung kann auch über einen oder mehrere Dorne 129 Als Positionierelement 117 mit unterschiedlichen Längen erfolgen. Der Dorn 129 ist beispielsweise konisch, rund oder oval ausgestaltet.

Durch einen zweifarbigen Rohling oder ein Herstellungsverfahren mittels Inkjet-Verfahren wird es ermöglicht, die Positionierungselemente 117 auch im Bereich des Zahn- und Prothesenmaterials nah aneinanderliegend zu platzieren. Da nach der separaten Herstellung keine Verbindung des Zahnmaterials mit dem Prothesenmaterial stattfinden muss, liegt ein stabiles System vor. Durch eine Kombination von Zahnmaterial und Prothesenmaterial können Mindestwandstärken gemeinsam erzeugt werden. Zusätzlich eröffnet dies Freiheitsgrade bei speziellen Patientensituationen. Das Positionierungssystem 115 ermöglichte eine hochpräzise Verbindung mittels eines Form- und/oder Kraftschlusses. insbesondere bei Verwendung des Fügemediums 121.

Zudem können Adhäsivkanäle bei der Gestaltung eingebracht werden, so dass, wenn das Prothesengerüst in die Prothesenbasis und/oder die Prothesenzähne eingeschoben werden, das überschüssige Klebematerial über die Adhäsivkanäle ablaufen kann und der Einschub des Prothesengerüsts leicht durchgeführt werden kann. Dies würde auch Bläschen im Klebematerial verhindern.

Im Allgemeinen kann die Teilprothese 101 ein Positionierungssystem 115 zum gegenseitigen Positionieren eines Prothesengerüsts 105, einer Prothesenbasis 107 und/oder von Prothesenzähne 109 umfassen, das zumindest ein räumliches Positionierelement 117 aufweist, das an dem Prothesengerüst 105, der Prothesenbasis 107 und/oder den Prothesenzähne 109 angeordnet ist.

Das Positionierelement 117 ist beispielsweise ein Dorn 129 oder ein Steg 127, der an dem Prothesengerüst 105 gebildet ist. Zusätzlich zu dem Dorn 129 oder Steg 127 kann das Prothesengerüst 105 einen Vorsprung 131 umfassen, auf den eine Aussparung in der Prothesenbasis 107 und/oder den Prothesenzähnen 109 aufgeschoben wird, beispielsweise beim Aufschieben auf den Dorn 129 oder Steg 127. Die Prothesenbasis 107 und/oder die Prothesenzähne 109 können eine Aussparung zur Aufnahme des Dorns 129 oder Stegs 127 aufweisen. Dies Ausnehmung kann sich entlang einer Zahnreihe erstecken. Der Dorn oder Steg kann einen ovalen, rechteckigen, quadratischen oder stufenförmigen Querschnitt aufweisen.

Das Positionierelement 117 kann durch einen Vorsprung oder eine Ausnehmung in dem Prothesengerüst 105, der Prothesenbasis 107 und/oder den Prothesenzähne 109 gebildet sein. Der Vorsprung oder die Ausnehmung können eine konische oder zylindrische Form ausweisen. Die Positionierelemente 117 können jeweils an unterschiedlichen Komponenten der Teilprothese 101 angeordnet sein, wie beispielsweise dem Prothesengerüst 105, der Prothesenbasis 107 und/oder den Prothesenzähne 109. Jeweils zwei Positionierelemente 117 können formschlüssig oder kraftschlüssig zusammenwirken.

Das Positionierungssystem 115 umfasst beispielsweise ein Fügemedium 121 zum Verbinden des Prothesengerüsts 105, der Prothesenbasis 107 und/oder der Prothesenzähne 109. Das Fügemedium 121 ist beispielsweise opak, undurchsichtig oder lichtundurchlässig. Zudem kann ein Verfahren zum gegenseitigen Positionieren eines Prothesengerüsts 105, einer Prothesenbasis 107 und/oder von Prothesenzähne 109, den Schritt eines Positionierens mittels zumindest eines räumlichen Positionierelements 117 umfassen, das an dem Prothesengerüst 105, der Prothesenbasis 107 und/oder den Prothesenzähne 109 angeordnet ist.

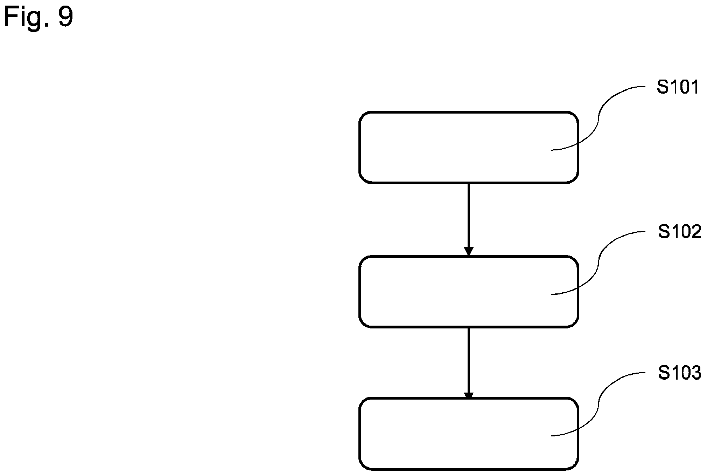

Fig. 9 zeigt ein Blockdiagramm des Herstellungsverfahrens mit Modellen oder zum modellfreien Herstellen von Teilprothesen 101. Nach der Abformung der Restgebisssituation und Kieferrelationsbestimmung erfolgt die Gestaltung der Teilprothese auf Basis der digital gewonnenen Daten.

Das Herstellungsverfahren für die Teilprothese 101 umfasst den Schritt S101 eines digitalen Gestaltens des Prothesengerüsts 105 mittels einer der Benutzerschnittstelle 103; den Schritt S102 eines digitalen Gestaltens der Prothesenbasis 107 mittels der gleichen Benutzerschnittstelle 103; und den Schritt S103 eines digitalen Gestaltens von Prothesenzähnen 109 mittels der Benutzerschnittstelle 103. Die Benutzerschnittstelle 103 umfasst beispielsweise eine Anzeige mit Bediengerät, wie beispielsweise einer Maus. Über die Benutzerschnittstelle 103 kann ein Benutzer mit dem Herstellungssystem 100 interagieren, um so das Prothesengerüst 105, die Prothesenbasis 107 und/oder Prothesenzähnen 109 räumlich und farblich in einer digitalen Umgebung zu gestalten.

Alle Komponenten der Teilprothese 101 können in einem einzigen Arbeitsschritt designt werden. Auf diese Weise kann ein Importieren oder Exportieren von unterschiedlichen Konstruktionselementen und die Verwendung von unterschiedlicher Software mit unterschiedlichen Schnittstellen vermieden werden.

Für eine Analyse von Lückengebissen und eine korrekte Anordnung von Halte- und Kopplungselementen 119 oder einer räumlichen Gestaltung der Teilprothese 101 und/oder der Komponenten kann ein Computerprogramm verwendet werden, das hierzu einen Algorithmus mit künstlicher Intelligenz verwendet. Der Algorithmus mit künstlicher Intelligenz kann beispielsweise ein künstliches neuronales Netz umfassen, das mit einer Vielzahl von Trainingsdaten angelernt worden ist. Die Trainingsdaten umfassen hierbei beispielsweise Daten über eine räumliche Form des Zahnbogens und der Restzähne, denen jeweils eine räumliche Form der Teilprothese 101 und der Komponenten zugeordnet ist. Wird das künstliche neuronale Netz mit diesen Trainingsdaten trainiert, kann dieses anschließend eine räumliche Form der Teilprothese 101 und der Komponenten automatisch auf Basis der räumlichen Form des Zahnbogens und der Restzähne berechnen. Diese Form kann dem Benutzer als Vorschlag dargestellt werden.

Auf diese Weise lassen sich Benutzerfehler bei der Planung verringern. Im Zusammenhang mit dem Positioniersystem 115 kann das Computerprogramm die Anordnung der Positionierelemente 117 in Verbindung mit den unendlichen Möglichkeiten der Gerüstgestaltungen analysieren und Gestaltungen der Teilprothese 101 automatisch berechnen und vorschlagen. Das Computerprogramm kann auf einem Computer mit einem Prozessor und einem digitalen Speicher zum Speichern des Computerprogramms und weiterer Daten ausgeführt werden.

Das automatisierte Herstellungsverfahren mit anschließender möglicher modellfreier Kombination der Komponenten vereinfacht den Herstellungsprozess von Teilprothesen 101 deutlich. Der automatisierte Design- und Fertigungsprozess für Teilprothesen 101 wird durch eine Software erreicht, die alle Konstruktionselemente und -Funktionen für die Komponenten der Teilprothese 101 vereint. Die Software (Computerprogramm) kann auf einem geeigneten Computer ausgeführt werden, der hierdurch das Herstellungssystem 100 bildet.

Durch das Herstellungsverfahren wird ein automatisierter Design- und Fertigungsprozess für Teilprothesen erreicht. Die Herstellung der Komponenten der Teilprothese 101 kann aus einem Stück (monolithisch), subtraktiv und/oder additiv erfolgen. Dadurch wird ein hochpräziser modellfreier Zusammenbau der Komponenten der Teilprothese 101 erreicht. Zudem wird ein Positionierungssystem 115 für die einzelnen Komponenten verwendet.

Die einzelnen Komponenten können durch eine Ansteuerung unterschiedlicher Materialien erzeugt werden. Entsprechende Datensätze für die jeweiligen Komponenten passen sich aneinander an, so dass diese nicht gesplittet oder voneinander separiert werden müssen. Durch die digitale Gestaltung eines Positionierungssystems wird der Zusammenbau und die Fügung der Komponenten erleichtert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Herstellungssystem
- 101: Teilprothese
- 103: Benutzerschnittstelle
- 105: Prothesengerüst
- 107: Prothesenbasis
- 109: Prothesenzähne
- 111: Herstellungsvorrichtung
- 113: Herstellungseinheit
- 115: Positionierungssystem
- 117: Positionierungselement
- 119: Kopplungs- oder Halteelemente
- 121: Fügemedium
- 123: Vorsprung
- 125: Ausnehmung
- 127: Steg
- 129: Dorn

## Patentansprüche

1. Computerprogramm umfassend Befehle, die bei der Ausführung des Computerprogramms durch einen Computer diesen veranlassen, ein Herstellungsverfahren in einem Herstellungssystem zum Herstellen von Teilprothesen (101) auszuführen, das eine Herstellungsvorrichtung (111) zum automatischen Herstellen eines Prothesengerüsts (105), einer Prothesenbasis (107) und/oder von Prothesenzähnen (109) umfasst, mit den Schritten:
- digitales Gestalten (S101) eines Prothesengerüsts (105) mit Kopplungselementen (119) an die Restzahnhartsubstanz mittels einer Benutzerschnittstelle (103);
- digitales Gestalten (S102) einer Prothesenbasis (107) mittels der Benutzerschnittstelle (103);
- digitales Gestalten (S103) von Prothesenzähnen (109) mittels der Benutzerschnittstelle (103); und
**dadurch gekennzeichnet, dass** das Computerprogramm ausgebildet ist, einen Vorschlag für die räumliche Form des Prothesengerüsts (105) mit Kopplungselementen (119) an die Restzahnhartsubstanz, einer Prothesenbasis (107) und/oder von Prothesenzähnen (109) zu berechnen.

2. Computerprogramm nach Anspruch 1, wobei das Prothesengerüst (105), die Prothesenbasis (107) und/oder die Prothesenzähne (109) automatisch durch eine Herstellungsvorrichtung (111) hergestellt werden.

3. Computerprogramm nach Anspruch 2, wobei das Prothesengerüst (105) durch eine erste Herstellungseinheit (113-1) und die Prothesenbasis (107) und/oder der Prothesenzähne (109) durch eine zweite Herstellungseinheit (113-2) hergestellt werden.

4. Computerprogramm nach einem der Ansprüche 1 bis 3, wobei Daten des gestalteten Prothesengerüsts (105), der gestalteten Prothesenbasis (107) und/oder der gestalteten Prothesenzähne (109) über eine Exportschnittstelle exportiert werden.

5. Computerprogramm nach einem der Ansprüche 1 bis 4, wobei ein Positionierungssystem (115) zum gegenseitigen Positionieren des Prothesengerüsts (105), der Prothesenbasis (107) und/oder der Prothesenzähne (109) über die Benutzerschnittstelle (103) digital gestaltet wird.

## Claims

1. A computer program comprising instructions which, upon execution of the computer program by a computer, cause the computer to execute a production method in a production system for producing partial prostheses (101), comprising a production device (111) for automatically producing a prosthesis framework (105), a prosthesis base (107) and/or prosthesis teeth (109), comprising the steps of:
- digitally designing (S101) a prosthesis framework (105) with coupling elements (119) to the residual tooth hard tissue by means of a user interface (103);
- digitally designing (S102) a prosthesis base (107) by means of the user interface (103);
- digitally designing (S103) prosthesis teeth (109) by means of the user interface (103); and
**characterized in that** the computer program is configured to calculate a suggestion for the spatial shape of the prosthesis framework (105) with coupling elements (119) to the residual tooth hard tissue, a prosthesis base (107) and/or prosthesis teeth (109).

2. The computer program as claimed in claim 1, wherein the prosthesis framework (105), the prosthesis base (107) and/or the prosthesis teeth (109) are automatically produced by a production device (111).

3. The computer program as claimed in claim 2, wherein the prosthesis framework (105) is produced by a first production unit (113-1) and the prosthesis base (107) and/or the prosthesis teeth (109) are produced by a second production unit (113-2).

4. The computer program as claimed in any one of claims 1 to 3, wherein data of the designed prosthesis framework (105), the designed prosthesis base (107) and/or the designed prosthesis teeth (109) are exported via an export interface.

5. The computer program as claimed in any one of claims 1 to 4, wherein a positioning system (115) for positioning the prosthesis framework (105), the prosthesis base (107) and/or the prosthesis teeth (109) relative to each other is digitally designed via the user interface (103).

## Revendications

1. Programme informatique comprenant des commandes qui, lorsqu'elles sont exécutées par un ordinateur, font exécuter au programme un processus de fabrication dans un système de fabrication de dentiers partiels (101) comprenant un dispositif de fabrication (111) pour la production automatique d'un cadre prothétique (105), une base de prothèse (107) et/ou des dents prothétiques (109), comprenant les étapes suivantes :
- conception numérique (S101) d'un cadre prothétique (105) avec des éléments de couplage (119) à la substance dure résiduelle de la dent au moyen d'une interface utilisateur (103) ;
- conception numérique (S102) d'une base de prothèse (107) au moyen de l'interface utilisateur (103) ;
- la conception numérique (S103) de dents prothétiques (109) au moyen de l'interface utilisateur (103) ; et
**caractérisé en ce que** le programme informatique est conçu pour calculer une proposition de forme spatiale de la structure prothétique (105) avec des éléments de couplage (119) à la substance dure résiduelle de la dent, une base de prothèse (107) et/ou des dents prothétiques (109).

2. Programme informatique selon la revendication 1, où le cadre prothétique (105), la base de la prothèse (107) et/ou les dents prothétiques (109) sont fabriqués automatiquement par un appareil de fabrication (111).

3. Programme informatique selon la revendication 2, où le cadre prothétique (105) est produit par une première unité de fabrication (113-1) et la base de la prothèse (107) et/ou les dents prothétiques (109) par une seconde unité de fabrication (113-2).

4. Programme informatique selon l'une des revendications 1 à 3, où les données du cadre prothétique conçue (105), de la base de prothèse conçue (107) et/ou des dents prothèses conçues (109) sont exportées par l'intermédiaire d'une interface d'exportation.

5. Programme informatique selon l'une des revendications 1 à 4, où un système de positionnement (115) pour le positionnement respectif du cadre prothétique (105), de la base de prothèse (107) et/ou des dents prothétiques (109) est conçu de manière numérique par l'intermédiaire de l'interface utilisateur (103).
